# FASCICULE DE BREVET EUROPEEN

(11) **EP 3 479 046 B1**
(45) Date de publication et mention de la délivrance du brevet: **09.09.2020**
(21) Numéro de dépôt: 17733505.6
(22) Date de dépôt: 05.06.2017
(51) Int. Cl.: F28D 20/02

(54) **BATTERIE THERMIQUE À MATÉRIAU À CHANGEMENT DE PHASE**
THERMISCHE BATTERIE MIT PHASENWECHSELMATERIAL
THERMAL BATTERY WITH PHASE-CHANGE MATERIAL

(30) Priorité: 29.06.2016 FR 1656056
(43) Date de publication de la demande: 08.05.2019
(73) Titulaire: Valeo Systemes Thermiques, 78320 Le Mesnil Saint Denis (FR)
(72) Inventeur: AZZOUZ, Kamel, 78322 Le Mesnil Saint Denis Cedex (FR); LISSNER, Michael, 78322 Le Mesnil Saint Denis Cedex (FR); TISSOT, Julien, 78322 Le Mesnil Saint Denis Cedex (FR)
(74) Mandataire: Tran, Chi-Hai
(86) Numéro de dépôt international: PCT/FR2017/051412
(87) Numéro de publication internationale: WO 2018/002462

(56) Documents cités:
- EP-A1- 0 010 819
- EP-A2- 1 156 293
- US-A- 4 098 852

## Description

La présente invention concerne le domaine de batteries thermiques et plus précisément les batteries thermiques comportant un matériau à changement de phase. Une batterie thermique selon la revendication 1 est connue du document EP 1 156 293 A2.

Les batteries thermiques sont généralement utilisées pour le chauffage de l'habitacle, notamment dans des véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite d'une transmission automatique de véhicules à moteur à combustion interne.

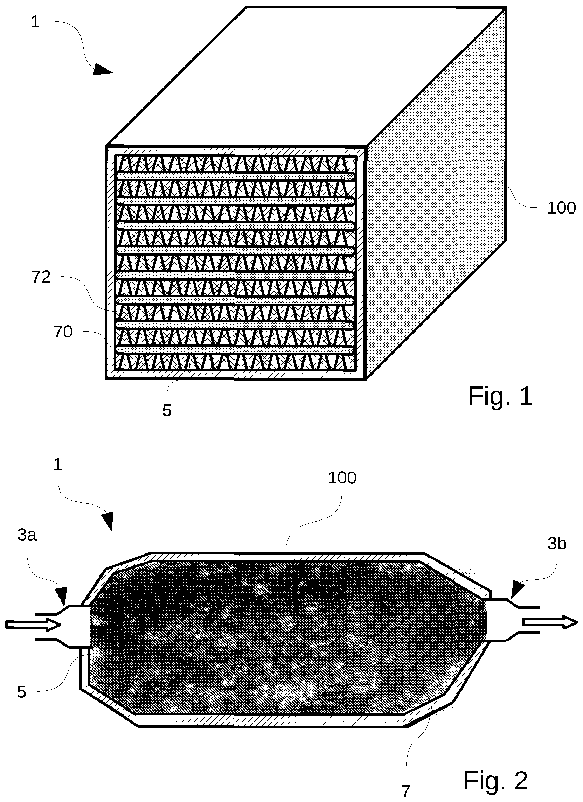

La figure 1 montre une batterie thermique 1 à matériau à changement de phase 5 de l'art antérieur. Cette batterie thermique comporte une paroi 100 formant une enceinte à l'intérieur de laquelle est placé le matériau à changement de phase 5. Des tubes plats 70, dans lesquelles circule un fluide entre une entrée et une sortie de fluide, sont placés à l'intérieur de l'enceinte au sein du matériau à changement de phase 5. Les tubes plats 70 forment un empilement et des ailettes 72 sont placées entre lesdits tubes plats 70.

Cependant, pour ce genre de batterie thermique 1 de l'art antérieur, le recours à des tubes plats 70 et des ailettes 72 en métal est néfaste pour la masse totale de la batterie thermique. De plus, même avec la présence des ailettes 72, la diffusion thermique et le transfert thermique entre le fluide et le matériau à changement de phase 5 peut ne pas être optimal. En effet, c'est le pas d'ailette 72 qui conditionne le transfert thermique du fait de la distance maximale pouvant exister entre une ailette 72 et le matériau à changement de phase 5.

Un des buts de la présente invention est donc de remédier au moins partiellement aux inconvénients de l'art antérieur et de proposer une batterie thermique améliorée.

La présente invention concerne donc une batterie thermique comportant une paroi formant une enceinte comprenant en son sein un matériau à changement de phase, ladite enceinte comportant une entrée de fluide et une sortie de fluide, lesdites entrée et sortie de fluide étant reliées entre-elles par un faisceau de fibres creuses destiné à la circulation du fluide, ledit matériau à changement de phase étant présent entre lesdites fibres creuses.

Le fait d'utiliser des fibres creuses pour la circulation du fluide au sein de la batterie thermique permet notamment d'homogénéiser la distribution des fibres creuses et donc d'homogénéiser la circulation du fluide au travers du matériau à changement de phase. De ce fait, la batterie thermique est plus performante car il n'y a pas ou peu de zones au sein de l'enceinte de la batterie thermique où le matériau à changement de phase est éloigné d'une fibre creuse.

Selon un aspect de l'invention, les fibres creuses sont en matériau polymère.

Selon l'invention, les fibres creuses se repartissent dans l'ensemble du volume de ladite enceinte de façon désordonnée.

Selon un autre aspect de l'invention, les fibres creuses ont un diamètre compris entre 0,4 et 1 mm, notamment entre 0,4 et 0,6 mm.

Selon un autre aspect de l'invention, les fibres creuses ont une épaisseur de paroi comprise entre 0,025 et 0,1 mm.

Selon un autre aspect de l'invention, le faisceau de fibres creuses comporte un nombre de fibres creuses supérieur à mille.

Selon un autre aspect de l'invention, ladite batterie thermique comporte sur une même section, une densité de fibres creuses comprise entre 0,5 et 1,5 million par m², de préférence entre 0,8 et 1,2 million par m².

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une batterie thermique de l'art antérieur en perspective, en coupe,
- la figure 2 montre une représentation schématique d'une batterie thermique en coupe et en vue de côté,
- la figure 3 montre une représentation schématique d'une fibre creuse en coupe,
- les figures 4 et 5 montrent des représentations de batteries thermiques selon différent modes de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

La figure 2 montre une batterie thermique 1 selon l'invention, comportant une paroi 100 formant une enceinte comprenant en son sein un matériau à changement de phase 5. Le matériau à changement de phase 5 rempli ladite enceinte et il peut notamment être sélectionné parmi les matériaux à changement de phase 5 ayant une température de transition comprise entre -10 et 110 °C. Plus particulièrement, cette température peut être comprise entre 50 °C et 80 °C pour une batterie thermique 1 destinée à stocker de la chaleur, comprise entre 20 et 40 °C pour une batterie thermique destinée à améliorer la gestion thermique des batteries électriques, ou comprise entre - 10 et 25 °C pour une batterie thermique 1 destinée à stocker du froid. Afin de garantir une grande capacité de stockage d'énergie, le matériau à changement de phase 5 peut avoir une chaleur latente comprise entre 100 et 300 kJ/kg.

La paroi 100 de l'enceinte peut être réalisée en métal ou en matériau polymère. Ladite paroi 100 peut également comporter une enveloppe extérieure thermiquement isolante.

L'enceinte de la batterie thermique 1 comporte une entrée de fluide 3a et une sortie de fluide 3b reliées entre-elles par un faisceau de fibres creuses 7. Le faisceau de fibres creuses 7 traverse le matériau à changement de phase 5 de sorte que ledit matériau à changement de phase 5 est présent entre les fibres creuses 7.

Le fait d'utiliser des fibres creuses 7 pour la circulation du fluide au sein de la batterie thermique 1 permet notamment d'homogénéiser la distribution des fibres creuses 7 et donc d'homogénéiser la circulation du fluide au travers du matériau à changement de phase 5. De ce fait, la batterie thermique 1 est plus performante car il n'y a pas ou peu de zones au sein de l'enceinte de la batterie thermique 1 où le matériau à changement de phase 5 est éloigné d'une fibre creuse 7. En effet, la diffusion de l'énergie calorifique entre le fluide et le matériau à changement de phase 5 peut être ralenti par la conductivité thermique propre dudit matériau à changement de phase 5. Ainsi, plus un matériau à changement de phase 5 est épais plus la diffusion de l'énergie calorifique sur toute cette épaisseur est longue.

Les fibres creuses 7 sont de préférence réalisées en matériau polymère, par exemple en poly-propylene (PP), poly-carbonate (PC) ou encore en poly-amide (PA). Cela permet notamment d'avoir des fibres creuses 7 imperméables au fluide les traversant. De plus ces matériaux permettent, pour des diamètres fins, d'avoir des fibres creuses 7 souples ce qui permet de placer les fibres creuses 7 n'importe où dans l'enceinte de la batterie thermique 1. Les fibres creuses 7 se répartissent dans l'ensemble du volume de ladite enceinte de façon désordonnée.

L'utilisation de fibres creuses 7 en matériau polymère permet également de diminuer le poids de la batterie thermique 1 par rapport à une batterie thermique 1 de l'art antérieur utilisant un faisceau de tubes 70 métallique avec des ailettes 72 également en métal.

La batterie thermique 1 peut notamment comprendre, sur une même section, une densité de fibres creuses 7 comprise entre 0,5 et 1,5 million par m², de préférence entre 0,8 et 1,2 million par m². Pour obtenir une telle densité, les fibres creuses 7 ont une longueur supérieure à la distance séparant l'entrée de fluide 3a et la sortie de fluide 3b. Depuis l'entrée de fluide 3a vers la sortie de fluide 3B, une fibre creuse 7 a un parcours sinueux et peut passer plusieurs fois par une même section au sein de l'enceinte de la batterie thermique 1.

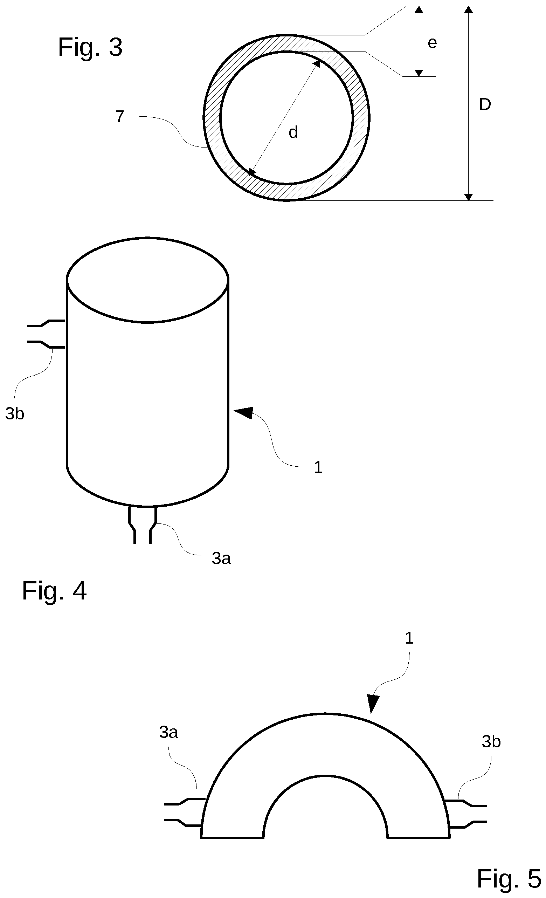

Comme illustré à la figure 3, les fibres creuses 7 ont un diamètre D compris entre 0,4 et 1 mm, notamment entre 0,4 et 0,6 mm. Les fibres creuses 7 ont également une épaisseur de paroi e comprise entre 0,025 et 0,1 mm. Ces dimensions font que le diamètre interne d des fibres creuses 7 reste important par rapport à leur taille. Ces dimensions permettent plus particulièrement de multiplier le nombre de fibres creuses 7 au sein de l'enceinte de la batterie thermique 1, généralement au dessus de mille, et également d'augmenter la surface d'échange entre le matériau à changement de phase 5 et le fluide.

De plus pour diverses vitesses de circulation du fluide, plus le diamètre D est faible, plus le coefficient de transfert thermique est important. Pour les dimensions décrites ci-dessus, le coefficient de transfert thermique des fibres creuses 7 en matériau polymère peut atteindre des valeurs supérieures à 2100 W/m²K pour un transfert thermique entre deux fluides.

Pour une batterie thermique 1 de l'art antérieur, illustrée à la figure 1, composée d'un empilement d'une vingtaine de tubes plats 70 en aluminium et ayant un taux de remplissage en matériau à changement de phase 5 au sein de l'enceinte de l'ordre de 80 %, la section totale de passage pour le fluide peut être de l'ordre de 600 mm².

Pour cette même batterie 1 de l'art antérieur, la surface d'échange interne (c'est-à-dire la surface en contact direct avec le fluide, soit dans le cas présent la surface interne totale des tubes plats 70) peut être de l'ordre de 0,26 m². La surface d'échange externe (c'est-à-dire la surface en contact direct avec le matériau à changement de phase 5, soit dans le cas présent la surface externe totale des tubes plats 70 cumulée à celle des ailettes 72) peut être quant à elle de l'ordre de 2,7 m².

Pour une batterie thermique 1 selon l'invention, par exemple illustrée à la figure 2, ayant un même volume interne que la batterie thermique 1 de l'art antérieur et ayant également un taux de remplissage en matériau à changement de phase 5 au sein de l'enceinte également de l'ordre de 80 %, le nombre de fibres creuses 7 peut être de l'ordre de 8000. La section totale de passage pour le fluide peut être alors de l'ordre de 1300 mm².

La surface d'échange interne (c'est-à-dire la surface en contact direct avec le fluide, soit dans le cas présent la surface interne totale des fibres creuses 7) peut être quant à elle de l'ordre de 2,1 m². La surface d'échange externe (c'est-à-dire la surface en contact direct avec le matériau à changement de phase 5, soit dans le cas présent la surface externe totale des fibres creuses 7) peut être également de l'ordre de 2,7 m².

Ainsi, du fait de l'utilisation de fibres creuses 7, et de leur nombre élevé, on a une meilleure surface d'échange entre le fluide et le matériau à changement de phase 5 notamment du fait d'une surface d'échange interne plus importante. Cette surface d'échange interne peut par exemple être multipliée par 10 par rapport à une batterie thermique 1 de l'art antérieur. Le fluide bénéficie donc d'une surface d'échange « directe » plus importante avec le matériau à changement de phase 5 et ne passe pas par une surface d'échange « indirecte » comme les ailettes 72 qui ne font que conduire l'énergie calorifique des tubes plats 70.

De plus, la batterie thermique 1 de l'art antérieur nécessite l'utilisation d'ailettes 72 pour augmenter la surface d'échange externe et le transfert thermique. Pour la batterie thermique 1 selon l'invention, il n'est pas nécessaire d'utiliser d'ailettes pour atteindre une surface d'échange externe équivalente. Cela permet de diminuer le poids de la batterie thermique 1 et également de diminuer les coûts de production.

Toujours du fait de l'utilisation de fibre creuses 7 et de leur grand nombre, la section totale de passage pour le fluide est augmentée par rapport à une batterie thermique 1 de l'art antérieur, ce qui limite fortement les pertes de charges liées à l'utilisation d'une batterie thermique 1 selon l'invention. Cette diminution des pertes de charges permet notamment l'utilisation d'une pompe ou d'un compresseur moins puissant, donc plus petit et plus économique, que pour une batterie thermique 1 de l'art antérieur, afin de faire circuler le fluide.

D'un point de vue de sa fabrication, la batterie thermique 1 selon l'invention permet notamment d'éviter une étape de fabrication d'un faisceau de tubes 70 avec des ailettes 72, par exemple par brasage.

Dans le processus de fabrication de la batterie thermique 1 selon l'invention, le faisceau de fibres creuses 7 est simplement disposé dans l'enceinte de ladite batterie thermique 1 de sorte que les fibres creuses 7 soient disposées de façon désordonnée dans ladite enceinte.

Le fluide circulant au sein du faisceau de fibres creuses 7 peut par exemple être un fluide caloporteur du système de refroidissement d'un moteur thermique, de gestion thermique d'air d'admission, de gestion thermique de batteries électriques, d'un ou plusieurs moteurs électriques, d'un système de gestion thermique de l'habitacle comme par exemple une unité de climatisation, ou bien encore d'huile moteur ou de transmission.

Du fait que les fibres creuses 7 sont souples et réparties de façon désordonnée dans l'enceinte, la batterie thermique 1 peut prendre des formes variées, comme par exemple cylindrique comme sur la figure 4, parallélépipédique ou encore des formes plus complexes comportant des coudes ou des zones tronquées comme illustré sur les figures 2 ou 5. Cette flexibilité dans les formes possibles de la batterie thermique 1 permet d'adapter la forme de la batterie thermique 1 aux endroits où elle est destinée à être installée dans le véhicule automobile, par exemple au niveau des passages de roue, sous le pare-choc ou encore sous les feux de signalisation.

De plus, de part cette souplesse du faisceau de fibres creuses 7, les entrée 3a et sortie 3b de fluide peuvent être positionnées où bon le semble en fonction de la forme et l'emplacement de la batterie thermique 1 dans le véhicule automobile.

Ainsi, on voit bien que la batterie thermique 1 selon l'invention, est plus performante et plus facile à intégrer au sein du véhicule automobile du fait de l'utilisation d'un faisceau de fibres creuses 7.

## Revendications

1. Batterie thermique (1) comportant une paroi (100) formant une enceinte comprenant en son sein un matériau à changement de phase (5), ladite enceinte comportant une entrée de fluide (3a) et une sortie de fluide (3b), lesdites entrée (3a) et sortie (3b) de fluide étant reliées entre-elles par un faisceau de fibres creuses (7) destiné à la circulation du fluide, ledit matériau à changement de phase (5) étant présent entre lesdites fibres creuses (7), **caractérisé en ce que** les fibres creuses (7) se repartissent dans l'ensemble du volume de ladite enceinte de façon désordonnée.

2. Batterie thermique (1) selon la revendication précédente, **caractérisée en ce que** les fibres creuses (7) sont en matériau polymère.

3. Batterie thermique (1) selon l'une des revendications précédentes, **caractérisée en ce que** les fibres creuses (7) ont un diamètre (D) compris entre 0,4 et 1 mm, notamment entre 0,4 et 0,6 mm.

4. Batterie thermique (1) selon l'une des revendications précédentes, **caractérisée en ce que** les fibres creuses (7) ont une épaisseur de paroi comprise entre 0,025 et 0,1mm.

5. Batterie thermique (1) selon l'une des revendications précédentes, **caractérisée en ce que** le faisceau de fibres creuses (7) comporte un nombre de fibres creuses (7) supérieur à mille.

6. Batterie thermique (1) selon l'une des revendications précédentes, **caractérisée en ce que** ladite batterie thermique (1) comporte, sur une même section de batterie thermique (1), une densité de fibres creuses (7) comprise entre 0,5 et 1,5 million par m², de préférence entre 0,8 et 1,2 million par m².

## Patentansprüche

1. Thermische Batterie (1), welche eine Wand (100) aufweist, die eine Umhüllung bildet, welche in ihrem Inneren ein Phasenwechselmaterial (5) umfasst, wobei die Umhüllung einen Fluideinlass (3a) und einen Fluidauslass (3b) aufweist, wobei der Fluideinlass (3a) und der Fluidauslass (3b) durch ein Bündel von Hohlfasern (7) miteinander verbunden sind, das für die Zirkulation des Fluids bestimmt ist, wobei das Phasenwechselmaterial (5) zwischen den Hohlfasern (7) vorhanden ist, **dadurch gekennzeichnet, dass** die Hohlfasern (7) im gesamten Volumen der Umhüllung auf ungeordnete Weise verteilt sind.

2. Thermische Batterie (1) nach dem vorhergehenden Anspruch, **dadurch gekennzeichnet, dass** die Hohlfasern (7) aus Polymermaterial bestehen.

3. Thermische Batterie (1) nach einem der vorhergehenden Ansprüche, **dadurch gekennzeichnet, dass** die Hohlfasern (7) einen Durchmesser (D) zwischen 0,4 und 1 mm, insbesondere zwischen 0,4 und 0,6 mm aufweisen.

4. Thermische Batterie (1) nach einem der vorhergehenden Ansprüche, **dadurch gekennzeichnet, dass** die Hohlfasern (7) eine Wanddicke zwischen 0,025 und 0,1 mm aufweisen.

5. Thermische Batterie (1) nach einem der vorhergehenden Ansprüche, **dadurch gekennzeichnet, dass** das Bündel von Hohlfasern (7) eine Anzahl von Hohlfasern (7) aufweist, die größer als tausend ist.

6. Thermische Batterie (1) nach einem der vorhergehenden Ansprüche, **dadurch gekennzeichnet, dass** die thermische Batterie (1) in ein und demselben Querschnitt der thermischen Batterie (1) eine Dichte von Hohlfasern (7) zwischen 0,5 und 1,5 Millionen pro m², vorzugsweise zwischen 0,8 und 1,2 Millionen pro m² aufweist.

## Claims

1. Thermal battery (1) comprising a wall (100) forming an enclosure comprising within it a phase-change material (5), said enclosure comprising a fluid inlet (3a) and a fluid outlet (3b), said fluid inlet (3a) and outlet (3b) being linked to one another by a bundle of hollow fibres (7) intended for the circulation of the fluid, said phase-change material (5) being present between said hollow fibres (7), **characterized in that** the hollow fibres (7) are distributed throughout the volume of said enclosure in a disorderly fashion.

2. Thermal battery (1) according to the preceding claim, **characterized in that** the hollow fibres (7) are made of polymer material.

3. Thermal battery (1) according to one of the preceding claims, **characterized in that** the hollow fibres (7) have a diameter (D) of between 0.4 and 1 mm, notably between 0.4 and 0.6 mm.

4. Thermal battery (1) according to one of the preceding claims, **characterized in that** the hollow fibres (7) have a wall thickness of between 0.025 and 0.1 mm.

5. Thermal battery (1) according to one of the preceding claims, **characterized in that** the bundle of hollow fibres (7) comprises a number of hollow fibres (7) greater than 1000.

6. Thermal battery (1) according to one of the preceding claims, **characterized in that** said thermal battery (1) comprises, over a same section of thermal battery (1), a density of hollow fibres (7) of between 0.5 and 1.5 million per m², preferably between 0.8 and 1.2 million per m².
